# EUROPEAN PATENT APPLICATION

(11) **EP 4 141 246 A1**
(43) Date of publication of application: **01.03.2023**
(21) Application number: 22187998.4
(22) Date of filing: 01.08.2022
(51) Int. Cl.: F02F 3/22

(54) **PISTON STRUCTURE OF ENGINE, AND ENGINE**

(30) Priority: 31.08.2021 JP 2021141288
(71) Applicant: MAZDA MOTOR CORPORATION, Hiroshima 730-8670 (JP)
(72) Inventor: MATSUDA, Hirotsugu, Fuchu-cho, Aki-gun,730-8670 (JP); UCHIDA, Kenji, Fuchu-cho, Aki-gun,730-8670 (JP)
(74) Representative: Müller-Boré & Partner Patentanwälte PartG mbB

(57) **Abstract**

A piston structure of an engine is provided, which includes a piston having a crown part including a crown surface defining a combustion chamber and an opposite back surface, an oil jet that injects oil toward the back surface, a center side first cavity and an outer-circumference side second cavity that are formed inside the crown part and partitioned from each other. Each cavity includes a ceiling surface on the combustion chamber side and an opposite bottom surface. The structure also includes a communicating hole that is formed in a partitioning wall between the cavities and communicates the first cavity with the second cavity, an introduction hole that is formed in the bottom surface of the first cavity and into which oil injected toward the back surface is introduced, and a discharge hole that is formed in the bottom surface of the second cavity and discharges the oil.

## Description

### TECHNICAL FIELD

The present disclosure relates to a piston structure of an engine, and an engine.

### BACKGROUND OF THE DISCLOSURE

Since a piston of an engine contacts a hot combustion chamber, it easily rises in temperature. Therefore, it is known that the piston is cooled by providing a cooling channel inside the piston and introducing oil injected from an oil jet into the cooling channel.

For example, a piston of an engine disclosed in JP2019-052628A is provided with a crown part and a cooling channel. The crown part has a crown surface which defines a combustion chamber, and a back surface on the opposite side of the crown surface. The cooling channel is formed inside the crown part (i.e., between the crown surface and the back surface), into a C-ring shape so as to conform to an outer circumference of the crown part.

Meanwhile, there is CI (Compression Ignition) combustion as an engine combustion mode, which is combustion that is started by a mixture gas inside the combustion chamber carrying out compressed self-ignition. As the present inventors investigated a starting position of the compressed self-ignition of the mixture gas inside the combustion chamber, they discovered that the compressed self-ignition of the mixture gas is started toward a center side of the combustion chamber rather than on an outer circumference side.

Particularly, when the piston according to JP2019-052628A is used, the mixture gas on the outer circumference side of the combustion chamber tends to decrease in temperature because its heat is taken away by oil flowing through the cooling channel. Therefore, the temperature of the mixture gas on the center side of the combustion chamber becomes relatively higher than that on the outer circumference side, and the compressed self-ignition of the mixture gas easily starts on the center side of the combustion chamber more notably, compared with a case where a piston without the cooling channel is used.

If the compressed self-ignition of the mixture gas is started on the center side of the combustion chamber, the mixture gas on the outer circumference side of the combustion chamber becomes difficult to combust, and unburnt fuel loss increases.

### SUMMARY OF THE DISCLOSURE

The present disclosure is made in view of this regard, and one purpose thereof is to achieve both cooling of a piston, and reducing unburnt fuel loss of a mixture gas inside a combustion chamber during compression ignition.

According to one aspect of the present disclosure, a piston structure of an engine is provided, which includes a piston having a crown part including a crown surface defining a combustion chamber and a back surface on the opposite side of the crown surface, an oil jet that injects oil toward the back surface, a first cavity and a second cavity that are formed inside the crown part and partitioned from each other, the first cavity being located on a center side, the second cavity being located on an outer circumference side of the first cavity. Each of the first cavity and the second cavity includes a ceiling surface on a combustion chamber side and a bottom surface on the opposite side of the combustion chamber. The structure also includes a communicating hole that is formed in a partitioning wall between the first cavity and the second cavity to communicate the first cavity with the second cavity, an introduction hole formed in the bottom surface of the first cavity and into which oil injected toward the back surface from the oil jet is introduced, and a discharge hole that is formed in the bottom surface of the second cavity and discharges the oil. The communicating hole may be configured to penetrate the portioning wall in a penetrating direction.

According to this structure, the oil injected toward the back surface of the crown part from the oil jet is introduced into the first cavity on the center side via the introduction hole, and then the oil flows into the second cavity on the outer circumference side via the communicating hole, and is discharged outside of the crown part from the discharge hole formed in the bottom surface of the second cavity. Therefore, the oil circulates inside the crown part to cool the crown part.

Since the discharge hole is formed in the bottom surface of the second cavity, the oil which flowed into the second cavity via the communicating hole is rapidly discharged outside of the crown part from the discharge hole. Therefore, the oil will not fill the second cavity and will not reach its ceiling surface. Therefore, an air layer is formed near the ceiling surface of the second cavity.

The heat of the mixture gas on the center side in the combustion chamber is taken away by the oil which flows through the first cavity, and the mixture gas easily decreases in temperature. On the other hand, the mixture gas on the outer circumference side in the combustion chamber is insulated by the air layer formed near the ceiling surface of the second cavity, and decreasing the temperature is difficult. Therefore, the temperature of the mixture gas on the outer circumference side in the combustion chamber becomes higher than the temperature of the mixture gas on the center side in the combustion chamber.

Therefore, during compression ignition, compressed self-ignition of the mixture gas is first started on the outer circumference side of the combustion chamber, and compressed self-ignition of the mixture gas then takes place on the center side of the combustion chamber. Therefore, unburnt fuel loss of the mixture gas inside the combustion chamber during the compression ignition is reduced.

As described above, both the cooling of the piston and the reduction in the unburnt fuel loss of the mixture gas inside the combustion chamber during the compression ignition, can be achieved.

A discharge hole may also be formed in the bottom surface of the first cavity.

According to this structure, since the discharge hole is formed in the bottom surface of the first cavity, it is difficult for the oil in the first cavity to flow into the second cavity via the communicating hole. Thus, since it becomes more difficult for the oil to be filled in the second cavity, the air layer easily forms near the ceiling surface of the second cavity.

The discharge hole of the second cavity may be formed on an extension of the communicating hole in the penetrating direction or on an imaginary line extending in the penetrating direction. In other words, the discharge hole of the second cavity and the communication hole are aligned in the extending direction of the communicating hole.

According to this structure, by disposing the discharge hole on the extension of the communicating hole in the oil flow direction, the oil which flowed into the second cavity via the communicating hole can be discharged smoothly through the discharge hole.

The second cavity may include, on the extension, an opposing side surface that is a side surface opposing the communicating hole. With respect to a center position between an opening of the communicating hole at the second cavity and the opposing side surface, the discharge hole of the second cavity may be formed toward the opening. In other words, the discharge hole of the second cavity may be located between the opening of the communicating hole and the center position in the penetrating direction of the communicating hole.

According to this structure, the discharge hole can be disposed at a position in the second cavity as close as possible to the communicating hole. Therefore, the oil which flowed into the second cavity via the communicating hole can be discharged promptly through the discharge hole.

The bottom surface of the second cavity may be located on the opposite side of the combustion chamber with respect to the communicating hole.

According to this structure, since it is difficult for the oil that flowed into the second cavity via the communicating hole to reach the ceiling surface of the second cavity, the air layer more easily forms near the ceiling surface of the second cavity.

A surface area of the ceiling surface of the second cavity may be larger than a surface area of the ceiling surface of the first cavity.

According to this structure, the volume of the air layer formed near the ceiling surface of the second cavity can be increased more.

### BRIEF DESCRIPTION OF DRAWINGS

Fig. 1 is an elevational cross-sectional view illustrating an engine according to one embodiment of the present disclosure.
Fig. 2 is an elevational cross-sectional view illustrating a piston.
Fig. 3 is a plane cross-sectional view illustrating the piston.
Fig. 4 is an enlarged view of IV part in Fig. 2.

### DETAILED DESCRIPTION OF THE DISCLOSURE

Hereinafter, one embodiment of the present disclosure is described in detail with reference to the accompanying drawings. All of the features as shown in the drawings may not necessarily be essential. The following explanation of a desirable embodiment is merely illustration essentially, and therefore, it does not intend to limit the present disclosure, its application, or its use.

### (Configuration of Engine)

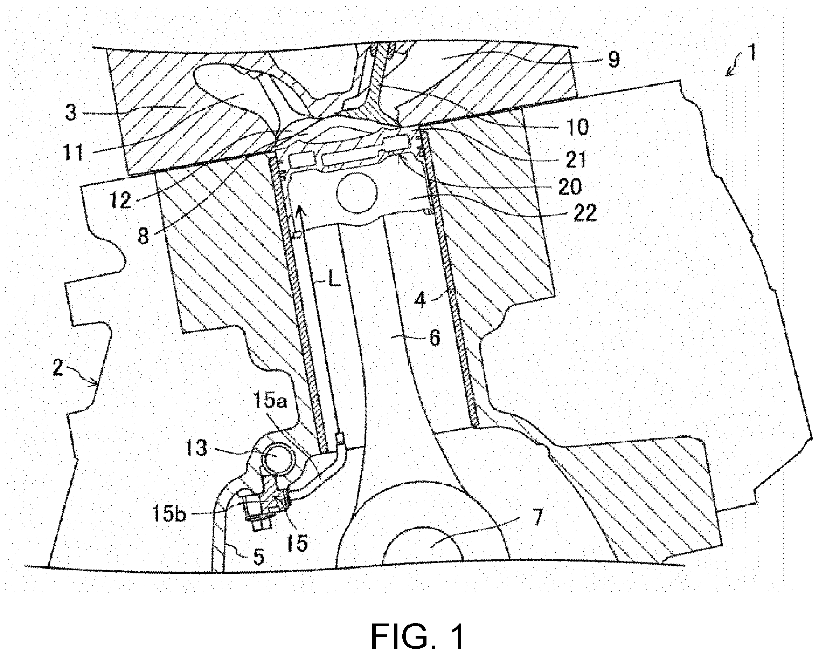

Fig. 1 is an elevational cross-sectional view of an engine 1. The engine 1 may be configured to perform CI (Compression Ignition) combustion in a part of its operating range (for example, a low-load range or lower-load range). Further, the engine 1 may also be configured to perform SI (Spark Ignition) combustion in a part of its operating range (for example, a high-load range or a higher-load range). The CI combustion is combustion which is started by a mixture gas inside a combustion chamber carrying out compressed self-ignition. The SI combustion is combustion accompanied by flame propagation, which is started by forcibly igniting the mixture gas inside the combustion chamber.

The CI combustion may include various kinds of combustion modes, such as HCCI (Homogeneous Charge Compression Ignition) combustion.

The engine 1 particularly includes a cylinder block 2 and a cylinder head 3. One or a plurality of cylinder bores 4 are formed in an upper part of the cylinder block 2, so as to be lined up in the cylinder arrayed direction. A crankcase 5 is formed in a lower part of the cylinder block 2. Note that, only one cylinder bore 4 is illustrated in Fig. 1.

A piston 20 is slidably (reciprocatable) inserted in the cylinder bore 4. The piston 20 is coupled to a crankshaft 7 via a connecting rod 6. The crankshaft 7 is accommodated in the crankcase 5. The piston 20 defines a combustion chamber 8, together with the cylinder bore 4 and the cylinder head 3.

Below, the axial direction (reciprocating direction) of the piston 20 may be referred to as the "up-and-down direction." The combustion chamber 8 side in the axial direction of the piston 20 may be referred to as "upward." The opposite side from the combustion chamber 8 in the axial direction of the piston 20 may be referred to as "downward." If the engine 1 is dispose so as to be leaned, the up-and-down direction may not be in agreement with the vertical direction.

An intake port 9 is formed in the cylinder head 3 for every cylinder bore 4. An intake valve 10 is disposed in the intake port 9. The intake valve 10 opens and/or closes a part between the combustion chamber 8 and the intake port 9 by a valve operating mechanism (not illustrated) at a given timing. Similarly, an exhaust port 11 is formed in the cylinder head 3 for every cylinder bore 4. An exhaust valve 12 is disposed in the exhaust port 11. The exhaust valve 12 opens and/or closes a part between the combustion chamber 8 and the exhaust port 11 by a valve operating mechanism (not illustrated) at a given timing.

An injector (not illustrated) may be attached to the cylinder head 3 for every cylinder bore 4. The injector injects fuel into the combustion chamber 8. Fuel may be gasoline, for example. Further, a spark plug (not illustrated) may be attached to the cylinder head 3 for every cylinder bore 4. The spark plug forcibly ignites the mixture gas of fuel and air inside the combustion chamber 8 during SI combustion. A lower surface of the cylinder head 3 (i.e., a ceiling surface of the combustion chamber 8) may have a so-called pentroof shape.

Inside the cylinder block 2, a main gallery 13 extends in the cylinder arrayed direction. Oil pumped from an oil pump (not illustrated) flows into the main gallery 13. An oil jet 15 is attached to the crankcase 5, at a position where it does not interfere with the connecting rod 6 and the crankshaft 7.

The oil jet 15 may have a nozzle part 15a and a valve part 15b. A tip end of the nozzle part 15a faces a back surface 21b of a crown part 21 (described later) of the piston 20. A ball-shaped valve body (not illustrated) and a spring (not illustrated) are built in the valve part 15b. The spring biases the valve body into a closed state. The oil pump supplies oil to the oil jet 15 via the main gallery 13. In detail, the oil is supplied to the oil jet 15 via passages which are branched from the main gallery 13.

The oil jet 15 is configured so that, when a pressure of the oil which flows through the main gallery 13 (a discharge pressure of the oil pump) is below a given value, the valve body of the valve part 15b may be maintained in the closed state according to the biasing force of the spring. On the other hand, the oil jet 15 is configured so that, when the oil pressure of the oil which flows through the main gallery 13 (the discharge pressure of the oil pump) is above the given value, the valve body of the valve part 15b becomes in an open state, while resisting the biasing force of the spring, to inject oil toward the back surface 21b of the crown part 21 (described later) of the piston 20 (see "L" in Fig. 1).

The oil pump may be connected to a controller (not illustrated). The controller is an ECU (Engine Control Unit), for example.

### (Structure of Piston)

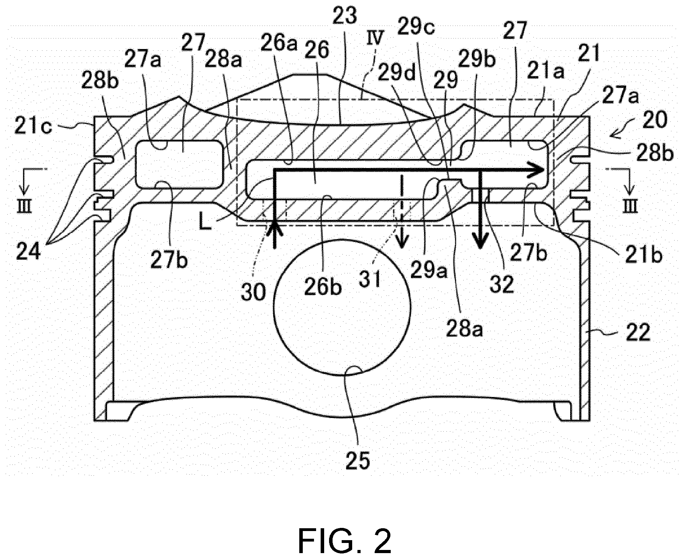

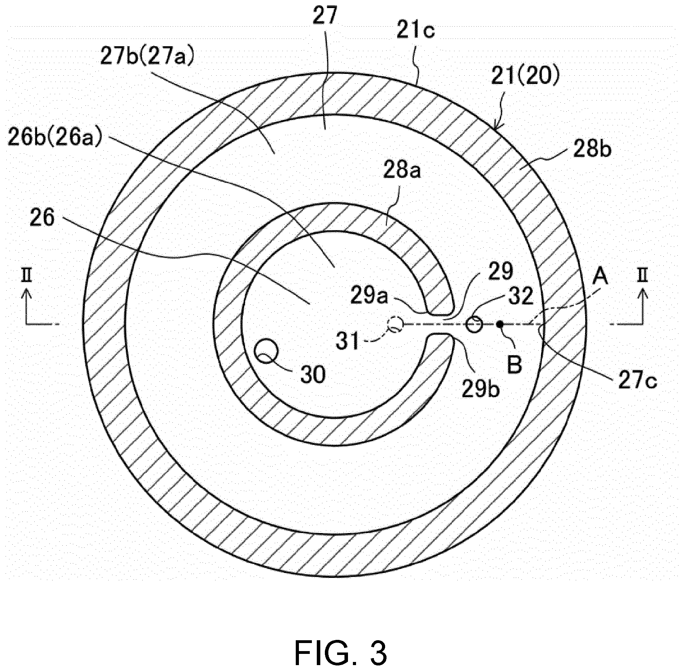

The structure of the piston 20 is described with reference to Figs. 2 and 3. Fig. 2 is an elevational cross-sectional view of the piston 20, where a cross section taken along a line II-II in Fig. 3 is illustrated. Fig. 3 is a plane cross-sectional view of the piston 20, where a cross section taken along a line III-III in Fig. 2 is illustrated.

As illustrated in Fig. 2, the piston 20 includes the crown part 21 and a skirt part 22. The crown part 21 may have a substantially disc shape. The crown part 21 is a part which slides with respect to the cylinder bore 4. The crown part 21 includes a crown surface 21a and the back surface 21b on the opposite side of the crown surface 21a. The crown surface 21a at least partially defines the combustion chamber 8, together with the cylinder head 3 and the cylinder bore 4. The crown surface 21a is bulged toward the ceiling surface of the combustion chamber 8. A cavity 23 is formed in a center part of the crown surface 21a.

Annular grooves 24 are formed in an outer circumference 21c of the crown part 21. A piston ring (not illustrated) is attached to the groove 24. The back surface 21b is formed so that its center part protrudes downwardly from its outer circumferential part.

The skirt part 22 extends downwardly from the outer circumference 21c of the crown part 21. A pin hole 25 for inserting a piston pin (not illustrated) is formed in the skirt part 22. The piston pin is to couple the connecting rod 6 to the piston 20.

The crown part 21 may be dividable in the up-and-down direction at the line III-III in Fig. 2.

As illustrated in Figs. 2 and 3, a first cavity 26 and a second cavity 27 which are partitioned from each other are formed inside the crown part 21 (i.e., between the crown surface 21a and the back surface 21b). The first cavity 26 is located relatively on the center side of the second cavity 27 in the radial direction of the piston 20. The second cavity 27 is located relatively on the outer circumference side of the first cavity 26 in the radial direction of the piston 20.

As illustrated in Fig. 3, the first cavity 26 is formed in a circular shape in the center part of the crown part 21, when seen in the axial direction of the piston 20. The second cavity 27 is formed in a circular annular shape which may surrounds at least partially or the entire circumference of the first cavity 26 on the outer circumference side of the crown part 21, when seen in the axial direction of the piston 20.

As illustrated in Fig. 3, the first cavity 26 and the second cavity 27 are defined by an inner circumferential wall part 28a formed in an annular shape in the center part of the crown part 21, and an outer circumferential wall part 28b of the crown part 21. The inner circumferential wall part 28a (hereinafter, referred to as the "partitioning wall 28a") divides the first cavity 26 from the second cavity 27. The outer circumferential wall part 28b divides the second cavity 27 from the exterior of the crown part 21.

As illustrated in Figs. 2 and 3, a communicating hole 29 is formed in the partitioning wall 28a. The communicating hole 29 penetrates the partitioning wall 28a to communicate the first cavity 26 with the second cavity 27. The penetrating direction of the communicating hole 29 may be the radial direction of the piston 20. An opening of the communicating hole 29 on the first cavity 26 side may be referred to as an "entrance 29a." An opening of the communicating hole 29 on the second cavity 27 side may be referred to as an "exit 29b."

As illustrated in Fig. 2, the first cavity 26 includes a ceiling surface 26a on the combustion chamber 8 side, and a bottom surface 26b on the opposite side from the combustion chamber 8. In the first cavity 26, the surface area of the ceiling surface 26a may be substantially equal to the surface area of the bottom surface 26b. Similarly, the second cavity 27 includes a ceiling surface 27a on the combustion chamber 8 side, and a bottom surface 27b on the opposite side from the combustion chamber 8. In the second cavity 27, the surface area of the ceiling surface 27a may be substantially equal to the surface area of the bottom surface 27b.

As illustrated in Figs. 2 and 3, an introduction hole 30 is formed in the bottom surface 26b of the first cavity 26. The introduction hole 30 introduces into the first cavity 26 the oil injected toward the back surface 21b of the crown part 21 from the oil jet 15.

As illustrated in Figs. 2 and 3, a discharge hole 32 is formed in the bottom surface 27b of the second cavity 27. The discharge hole 32 discharges the oil from the second cavity 27. As illustrated in Fig. 3, the discharge hole 32 in the second cavity 27 is formed on an extension A of the communicating hole 29 in the penetrating direction. In other words, the discharge hole 32 in the second cavity 27 may be formed on an imaginary line A extending in the penetrating direction (or along a center axis) of the communication hole 29.

Here, as illustrated in Fig. 3, the second cavity 27 includes, on the extension A, an opposing side surface 27c which is a side surface opposing to the communicating hole 29, particularly in the radial direction of the piston 20. The opposing side surface 27c is comprised of a radially inward side surface of the outer circumferential wall part 28b. The discharge hole 32 in the second cavity 27 is formed on the exit 29b side of the communicating hole 29 from a center position B between the exit 29b of the communicating hole 29 and the opposing side surface 27c.

As illustrated in Fig. 2, the ceiling surface 26a of the first cavity 26 may form substantially the same flat surface with an upper end part (ceiling surface) 29d of the communicating hole 29. The ceiling surface 27a of the second cavity 27 may be located on the combustion chamber 8 side of the ceiling surface 26a of the first cavity 26. That is, the ceiling surface 27a of the second cavity 27 may be located higher than the ceiling surface 26a of the first cavity 26.

As illustrated in Fig. 3, the surface area of the ceiling surface 27a of the second cavity 27 is larger than the surface area of the ceiling surface 26a of the first cavity 26.

As illustrated in Fig. 2, the bottom surface 27b of the second cavity 27 may be located on the opposite side of the combustion chamber 8, with respect to a lower end part (bottom surface) 29c of the communicating hole 29. That is, the bottom surface 27b of the second cavity 27 may be located lower than the lower end part (bottom surface) 29c of the communicating hole 29.

### (Operation and Effects)

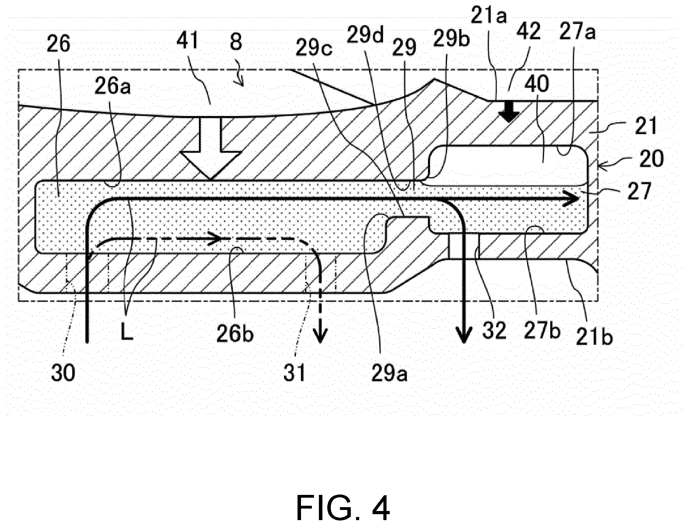

Operation and effects of the structure of the piston 20 according to this embodiment are described with mainly reference to Fig. 4.

The oil injected toward the back surface 21b of the crown part 21 in the piston 20 from the nozzle part 15a of the oil jet 15 is introduced into the first cavity 26 on the center side via the introduction hole 30, as illustrated by the reference character "L" in Fig. 4.

Then, the oil in the first cavity 26 flows into the second cavity 27 on the outer circumference side via the communicating hole 29, and is discharged outside of the crown part 21 from the discharge hole 32 formed in the bottom surface 27b of the second cavity 27. Therefore, the oil circulates inside the crown part 21 to cool the crown part 21.

Since the discharge hole 32 is formed in the bottom surface 27b of the second cavity 27, the oil which flowed into the second cavity 27 via the communicating hole 29 is rapidly discharged outside of the crown part 21 from the discharge hole 32. Therefore, the oil will not be filled in the second cavity 27 and will not reach the ceiling surface 27a. Therefore, an air layer 40 is formed near the ceiling surface 27a of the second cavity 27.

Heat of a mixture gas 41 on the center side in the combustion chamber 8 is taken away by the oil which flows through the first cavity 26, and the temperature of the mixture gas 41 easily decreases. On the other hand, a mixture gas 42 on the outer circumference side in the combustion chamber 8 is insulated by the air layer 40 formed near the ceiling surface 27a of the second cavity 27, and decreasing the temperature thereof is difficult. Therefore, the temperature of the mixture gas 42 on the outer circumference side in the combustion chamber 8 becomes higher than the temperature of the mixture gas 41 on the center side in the combustion chamber 8. That is, such a temperature distribution of the combustion chamber 8 that the temperature of the mixture gas 42 on the outer circumference side becomes higher than the temperature of the mixture gas 41 on the center side is realized.

Therefore, during compression ignition, compressed self-ignition of the mixture gas 42 is first started on the outer circumference side of the combustion chamber 8, and compressed self-ignition of the mixture gas 41 then takes place on the center side of the combustion chamber 8. Therefore, unburnt fuel loss of the mixture gases 41 and 42 inside the combustion chamber 8 (particularly, the mixture gas 42 on the outer circumference side) during the compression ignition is reduced.

As described above, both the cooling of the piston 20 and the reduction in the unburnt fuel loss of the mixture gas 41 and 42 inside the combustion chamber 8 during the compression ignition, can be achieved.

By disposing the discharge hole 32 on the extension A of the communicating hole 29 in the oil flow direction (the penetrating direction of the communicating hole 29), the oil which flowed into the second cavity 27 via the communicating hole 29 can be discharged smoothly through the discharge hole 32.

Since the discharge hole 32 in the second cavity 27 is formed on the exit 29b side of the communicating hole 29 from the center position B, the discharge hole 32 can be disposed at a position in the second cavity 27 as close as possible to the communicating hole 29. Therefore, the oil which flowed into the second cavity 27 via the communicating hole 29 can be discharged promptly through the discharge hole 32.

Since the bottom surface 27b of the second cavity 27 is located on the opposite side of the combustion chamber 8 with respect to the lower end part (bottom surface) 29c of the communicating hole 29 (i.e., the bottom surface 27b is located at a lower position), it is difficult for the oil which flowed into the second cavity 27 via the communicating hole 29 to reach the ceiling surface 27a of the second cavity 27. Therefore, the air layer 40 easily forms near the ceiling surface 27a of the second cavity 27.

By increasing the surface area of the ceiling surface 27a of the second cavity 27, the volume of the air layer 40 formed near the ceiling surface 27a of the second cavity 27 can be increased more.

Since the ceiling surface 27a of the second cavity 27 is located on the combustion chamber 8 side from the ceiling surface 26a of the first cavity 26 (located at a higher position), it is more difficult for the oil which flowed into the second cavity 27 via the communicating hole 29 to be filled in the second cavity 27, and reach the ceiling surface 27a. Therefore, the air layer 40 easily forms near the ceiling surface 27a of the second cavity 27.

Since the second cavity 27 is formed in the annular shape (see Fig. 3) which surrounds the entire first cavity 26, the compressed self-ignition of the mixture gas 42 is started from the outer circumference side of the combustion chamber 8, over the entire circumference of the combustion chamber 8.

### (Other Embodiments)

Although the present disclosure is described by the suitable embodiment as described above, such a description is not limitation, but various alterations are, of course, possible.

Although in the above embodiment the discharge hole 32 is formed only in the bottom surface 27b of the second cavity 27, it is not limited to this structure. As illustrated by two-dot chain lines in Figs. 2 to 4, a discharge hole 31 may also be formed in the bottom surface 26b of the first cavity 26, in addition to the bottom surface 27b of the second cavity 27.

According to this structure, since the discharge hole 31 is formed in the bottom surface 26b of the first cavity 26, it is difficult for the oil in the first cavity 26 to flow into the second cavity 27 via the communicating hole 29. Thus, since it is more difficult for the oil to filling the second cavity 27, the air layer 40 easily forms near the ceiling surface 27a of the second cavity 27.

Note that a distance between the discharge hole 31 and the entrance 29a of the communicating hole 29 in the first cavity 26 is preferred to be shorter than a distance between the introduction hole 30 and the entrance 29a of the communicating hole 29.

The bottom surface 27b of the second cavity 27 may form the same flat surface with the lower end part (bottom surface) 29c of the communicating hole 29.

The ceiling surface 27a of the second cavity 27 may be located at the same height as the ceiling surface 26a of the first cavity 26. Since the oil which flowed into the second cavity 27 via the communicating hole 29 is rapidly discharged from the discharge hole 32 formed in the bottom surface 27b of the second cavity 27, the air layer 40 may be formed near the ceiling surface 27a of the second cavity 27, even if the ceiling surface 27a of the second cavity 27 is not located at the position higher than the ceiling surface 26a of the first cavity 26.

The second cavity 27 may be formed in a rectangular annular shape which surrounds the entire first cavity 26, rather than is the circular annular shape. Further, the second cavity 27 does not need to surround the entire first cavity 26, and, for example, it may be formed in a C-ring shape (arc shape). Moreover, the second cavity 27 may be formed only in a partial area on the outer circumference side of the first cavity 26.

The engine 1 may perform CI combustion in all the operating ranges, without performing SI combustion.

Since the present disclosure is applicable to the piston structure of the engine, it is very useful and high in the industrial applicability.

It should be understood that the embodiments herein are illustrative and not restrictive, since the scope of the invention is defined by the appended claims rather than by the description preceding them.

### DESCRIPTION OF REFERENCE CHARACTERS

- A: Extension
- B: Center Position
- 1: Engine
- 8: Combustion Chamber
- 13: Main Gallery
- 15: Oil Jet
- 20: Piston
- 21: Crown Part
- 21a: Crown Surface
- 21b: Back Surface
- 26: First Cavity
- 26a: Ceiling Surface
- 26b: Bottom Surface
- 27: Second Cavity
- 27a: Ceiling Surface
- 27b: Bottom Surface
- 27c: Opposing Side Surface
- 28a: Partitioning Wall (Inner Circumferential Wall Part)
- 28b: Outer Circumferential Wall Part
- 29: Communicating Hole
- 29a: Entrance (Opening)
- 29b: Exit (Opening)
- 29c: Lower End Part
- 29d: Upper End Part
- 30: Introduction Hole
- 31: Discharge Hole
- 32: Discharge Hole
- 40: Air Layer
- 41: Mixture Gas
- 42: Mixture Gas

## Claims

1. A piston structure of an engine (1), comprising:
a piston (20) having a crown part (21) including a crown surface (21a) defining a combustion chamber (8) and a back surface (21b) on the opposite side of the crown surface (21a);
an oil jet (15) configured to inject oil toward the back surface (21b);
a first cavity (26) and a second cavity (27) that are formed inside the crown part (21) and partitioned from each other, the first cavity (26) being located on a center side, the second cavity (27) being located on an outer circumference side of the first cavity (26), and each of the first cavity (26) and the second cavity (27) including a ceiling surface (26a, 27a) on a combustion chamber side and a bottom surface (26b, 27b) on the opposite side of the combustion chamber (8);
a communicating hole (29) that is formed in a partitioning wall (28a) between the first cavity (26) and the second cavity (27) to communicate the first cavity (26) with the second cavity (27);
an introduction hole (30) formed in the bottom surface (26b) of the first cavity (26) and into which oil injected toward the back surface (21b) from the oil jet (15) is introduced; and
a discharge hole (32) that is formed in the bottom surface (27b) of the second cavity (27) and configured to discharge the oil.

2. The piston structure of claim 1, wherein a discharge hole (31) is also formed in the bottom surface (26b) of the first cavity (26).

3. The piston structure of claim 1 or 2, wherein the communicating hole (29) is configured to penetrate the partitioning wall (28a) in a penetrating direction, and
the discharge hole (32) of the second cavity (27) is formed on an extension (A) of the communicating hole (29) in the penetrating direction.

4. The piston structure of claim 3,
wherein the second cavity (27) includes, on the extension (A), an opposing side surface (27c) that is a side surface opposing the communicating hole (29), and
wherein with respect to a center position (B) between an opening (29b) of the communicating hole (29) at the second cavity (27) and the opposing side surface (27c), the discharge hole (32) of the second cavity (27) is formed toward the opening (29b).

5. The piston structure of any one of the preceding claims, wherein the bottom surface (27b) of the second cavity (27) is located on the opposite side of the combustion chamber (8) with respect to the communicating hole (29).

6. The piston structure of any one of the preceding claims, wherein a surface area of the ceiling surface (27a) of the second cavity (27) is larger than a surface area of the ceiling surface (26a) of the first cavity (26).

7. The piston structure of any one of the preceding claims, wherein the first cavity (26) is formed in a circular shape in a center part of the crown part (21), when seen in an axial direction of the piston (20).

8. The piston structure of any one of the preceding claims, wherein the second cavity (27) is formed in a circular annular shape and configured to surround the first cavity (26), when seen in an axial direction of the piston (20).

9. The piston structure of any one of the preceding claims, wherein the partitioning wall (28a) is formed in an annular shape.

10. The piston structure of any one of the preceding claims, wherein the first cavity (26) is defined by the partitioning wall (28a).

11. The piston structure of any one of the preceding claims, wherein the second cavity (27) is defined by the partitioning wall (28a) and an outer circumferential wall part (28b) of the crown part (21).

12. The piston structure of any one of the preceding claims, wherein the communicating hole (29) is configured to penetrate the partitioning wall (28a) in a radial direction of the piston (20).

13. The piston structure of any one of the preceding claims, wherein a temperature on an outer circumference side of the piston (20) is higher than a temperature on a center side of the piston (20).

14. An engine (1) comprising the piston structure of any one of the preceding claims.

15. The engine (1) of claim 14, wherein the engine (1) is configured to first cause compressed self-ignition on an outer circumference side of the combustion chamber (8), and then to cause compressed self-ignition on a center side of the combustion chamber (8).
